# EUROPEAN PATENT SPECIFICATION

(11) **EP 0 384 924 B1**
(45) Date of publication and mention of the grant of the patent: **04.01.1995**
(21) Application number: 89103519.8
(22) Date of filing: 28.02.1989
(51) Int. Cl.: B29C 33/50, B29C 53/08, B29D 23/00, B29L 31/24

(54) **A process for producing a resin product having a bent hollow portion and a core usable for the same process**
Verfahren zum Herstellen eines Harzgegenstandes mit einem gebogenen Hohlteil und Kern, anwendbar in diesem Verfahren
Procédé pour la fabrication d'un objet en résine pourvu d'une partie courbée creuse et noyau utilisable dans ce procédé

(43) Date of publication of application: 05.09.1990
(73) Proprietor: Asahi Kasei Kogyo Kabushiki Kaisha, Osaka-shi Osaka 530 (JP)
(72) Inventor: Tanaka, Yuji, Yokohama (JP); Tanada, Kiyoshi, Chiba-shi (JP)
(74) Representative: Blumbach, Kramer & Partner

(56) References cited:
- AT-A- 330 446
- DE-A- 1 604 528
- FR-A- 1 133 360
- FR-A- 2 177 240
- FR-A- 2 321 378
- FR-A- 2 393 222
- GB-A- 760 596
- GB-A- 842 815
- US-A- 4 746 386

## Description

This invention relates to a process for producing a resin product having a bent hollow portion, a core used in said production process and the use of such core in said process, usefull to produce parts for automobiles which have a bent hollow portion, for instance, water inlet/outlet, pipes such as oil strainers, ducts of induction systems, and intake manifolds, in the case where metallic materials for these parts are replaced by resins.

As a process for producing a resin product having a bent hollow portion, such as an S-tube or U-tube, which cannot easily be obtained by molding by means of, for example, a slide core, there is a process which comprises forming a low-melting alloy (for example, melting point of 138°C) consisting of Zn, Sn, Sb, etc. previously by casting, inserting the formed product into a mold as a core, coating the core with a resin, then heating the core consisting of the low-melting alloy to melt away the same from the resulting molded product, and thereby obtaining a resin product having a bent hollow portion.

However, the removal of the core consisting of the low-melting alloy by melting requires a long-time heating procedure for it to melt, and moreover in the case of mass production, recovery and re-casting of the melted low-melting alloy is indispensable. US-A-47 46 386 discloses a method of producing a fiber reinforced bent resin pipe in which a core mold is used comprised of an elongated mandrel carrying a coil spring loosely received within a sleeve of flexible semi-rigid polyethylene. A roving made of continuous reinforcing fiber is wound on the circumference of the core mold. Then, the mandrel is withdrawn from the coil spring and the core mold together with the reinforcing layer is put into an outer mold having a cavity comprised of two halves. Elastic members at both ends of the cavity are pressed against the outer circumference of the reinforcing layer. Then, liquid resin is injected into the outer mold so as to surround the reinforcing layer.

The object of the present invention is to provide for a process for producing a resin product having a bent hollow portion which is characterized by using a core having a high flexibility, a high retention of shape, and a surface coated with an elastomer thereby permitting easy production of the aforesaid product by a simple step of drawing out the core from a molded product, and the core being reusable.

This object is met according to the features of claim 1. A further aspect of the invention is directed to a core used in said production process (claim 7).

The present invention is widely applicable also in the case where the resin product having a bent hollow portion is a two-forked product or a multi-forked pipe. In this case, a two-forked or multi-forked pipe having a complicated shape can easily be produced by using a combination of a plurality of cores and if necessary, an insert mandrel (hereinafter sometimes referred to as a die) or a part for branching.

As the first embodiment, there is provided a process for producing a resin product having a bent hollow portion which is characterized by deforming a core obtained by coating a heat-resistant elastomer on a skeletal structure having high flexibility and shape retention into a desired shape, inserting the deformed core into a mold, packing a resin into the mold cavity, and then drawing out the core from the resulting molded product; and the core used in said production process.

As the second embodiment, there is provided a process for producing a resin product having a bent hollow portion according to the first embodiment, in which there is used a core obtained by sealing a low-melting alloy in a skeletal structure having a high flexibility, to impart a high retention of shape to the skeletal structure; and the core used in this production process.

As a preferable embodiment of the first embodiment, there is provided a process for producing a resin product having a bent hollow portion according to the first embodiment, in which there is used a core constructed by coating an elastomer on a skeletal structure having high flexibility and shape retention capability which has previously been deformed into a desired shape so as to have the same outer diameter in every portion of the core, thereby a precisely molded product can be obtained; and the core used in this production process.

When a multi-forked pipe is produced, a core for multi-forked pipe is formed by properly choosing and combining the cores used in the above embodiments in consideration of their using positions, shapes, etc. If necessary, a rigid insert die and/or a part for branching are used for connection.

The above embodiments are applicable to foam molding, and in this case, there is provided a process for producing a resin product having a bent hollow portion in which the resin is obtained by foam molding.

### BRIEF DESCRIPTION OF THE DRAWINGS

Figs. 1 to 17 show examples of the cores of the present invention, their constitutions, and flow sheets of molding steps using the cores.

Fig. 1A and Fig. 1B show examples of the constitution of a flexible metal pipe as core material which has high flexibility and shape retention. Fig. 2A and Fig. 2B show examples of the constitution of a flexible metal pipe having a high flexibility alone. A partially enlarged view is shown in the upper portion of each figure.

Fig. 3 and Fig. 4 are examples of diagrams showing the constitution of a core. Fig. 5 is a cross-sectional view for showing a working state of an apparatus used for coating an elastomer on the surface of a flexible pipe having the constitution shown in Fig. 2A, in producing a core using the flexible tube.

Fig. 6 and Fig. 7A show examples of core composed of a combination of the flexible pipe shown in Fig. 2, a low-melting alloy, and a flexible heater. Fig. 7B is a partially enlarged view of the constitution of core shown in Fig. 7A.

Fig. 8 shows one example of the flexible heater constituting the aforesaid skeletal structure.

Fig. 9 shows one example of variation of the constitution of core shown in Fig. 7.

Fig. 10 shows one example of a connection state of a terminal metal part portion in the case where the aforesaid flexible pipe is coated in a bent state with an elastomer.

Fig. 11 shows one example of flanged S-tube made of a resin of the present invention. Figs. 12 and 13 show parts for fixing a core in a mold, and accessory parts. In the Figures, 52, 54, 55 and 56 show a projection for combining the core itself with an adapter (54), the adapter, a mold for giving a shape, and a magnet for fixing or connecting the core itself with the adapter, respectively.

Figs. 14A through Fig. 14D and Fig. 15 are schematic illustrations of examples of molding step in the case where the core of this invention is used, and method for drawing out the core. In Figs. 14A through Fig. 14D, 8' shows a mold for giving a shape, 5A a resin, 8A a mold for injection molding, and 60 a pull for withdrawal. In Figs. 15A through Fig. 15D, 54A, 51, and 59 show an adapter, a molded product, and a clamp plate, respectively.

Figs. 16 and 17 show a combination of a plurality of cores and a part for connecting the cores to each other, and a combination of cores with one another, in the case of production of a two-forked tube or a multi-forked tube.

The core of this invention has high flexibility and shape retention and comprises a skeletal structure, desirably hollow structure having a high flexibility, an elastomer covering the surface of said structure, and a means having a high retention of shape which is, if necessary, provided in the hollow portion of said structure.

The core has such a high flexibility that its bending or unbending force is such that the core can be deformed with a force not larger than the compression strength of resin matrix of product, and such a high retention of shape that the core is not deformed at least by the flow pressure (2 to 3 kg/cm²) of resin. More preferably, at the time of drawing out the core, the core has such a flexibility that its bending or unbending force is 50 kg or less, and the surface of core is coated with an elastomer which is not adhesive to a resin to be used, does not flow at the molding and processing temperature of said resin, and is heat-resistant, so as to avoid the uneveness of the surface.

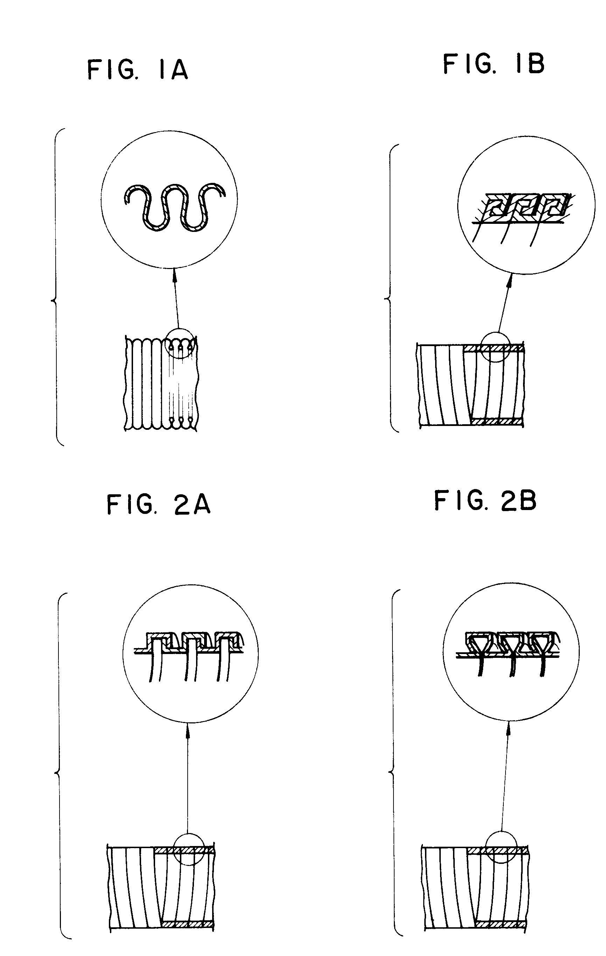

The skeletal structure constituting the aforesaid core is a structure having a high flexibility and for example, a cylindrical shape. Specific examples of the skeletal structure include, for example, ductile metal structures made of copper, copper alloy, lead, aluminum, aluminum alloy, or the like; flexible pipes such as bellows tubes obtained by forming a pipe from a thin plate of steel, copper, copper alloy, aluminum alloy, or the like, as skeletal structures having the structure shown in Fig. 1; and combinations of said ductile structures and said flexible pipes. Examples of the flexible pipes include, for instance, flexible pipes having the same constitution as those used in protective pipes for optical fibers, oscillating parts of desk or floor lamps, etc. In order to keep in a desired shape a skeletal structure having the constitution shown in Fig. 2, the retention of shape is improved by sealing a low-melting alloy in the hollow portion of a flexible pipe or a hose, for reinforcing the retention of shape, heating the pipe or hose to melt the low-melting metal, thereby imparting thereto flexibility, forming the pipe or hose into a desired shape, and then cooling the pipe or hose. Although the shape of the skeletal structure is usually a cylindrical shape, its section may be oval or square, according to the shape of a desired product.

As a method for the heating, there can be employed various methods, for example, methods using an external apparatus, such as heating by heat transfer by means of hot air, and radio frequency induction heating, and a method of providing a heater inside the core.

However, in this invention, the constitution of the skeletal structure and a material constituting said structure are not critical, so long as said structure has a high flexibility and if necessary, a high retention of shape.

The elastomer provided on the surface of the skeletal structure shown in Fig. 1 or Fig. 2 is not critical as long as it abolishes the uneveness of surface of the skeletal structure, has such a heat resistance that it does not flow at a molding temperature for a resin to be molded, and is not adhesive to said resin. Specific examples of elastomers usable in this invention include natural rubber, synthetic rubbers such as silicone rubber, fluororubber, urethane rubber, butadiene rubber, and the like, and thermoplastic elastomers.

As a method for providing the elastomer on the skeletal structure shown in Fig. 1 or Fig. 2, there can be employed molding methods such as casting under vacuum, injection, compression molding, and the like.

Specifically, a straight metal rod which fits the inside diameter of the skeletal structure is inserted into the skeletal structure and fixed for positioning of skeletal structure in a mold, after which the skeletal structure is inserted into a mold for coating with rubber, and the elastomer is provided thereon by casting under vacuum, or the like.

The elastomer can be provided in a desired shape from the beginning by inserting a metal rod previously bent into a desired shape into the skeletal structure, fixing the metal rod, thereafter inserting the skeletal structure into a mold for coating with rubber, and coating the skeletal structure with the elastomer.

However, when the radius of curvature is less than 80 mm in the bent portion of a resin to be produced by using a core constructed of a flexible pipe and an elastomer (e.g., a heat shrinkable silicone tube), firstly said pipe is covered by an elastomer tube, and, then an elastomer coating is provided on said elastomer tube, thereby the flexibility of the core can be retained because only small portions of the tube can enter the depressions of the flexible tube and the depressions are prevented from being filled by the elastomer coating. The two elastomers are preferably highly adhesive to each other and more preferably of the same kind.

The thickness of the elastomer provided is not critical, so long as the uneveness of surface of the skeletal structure is abolished.

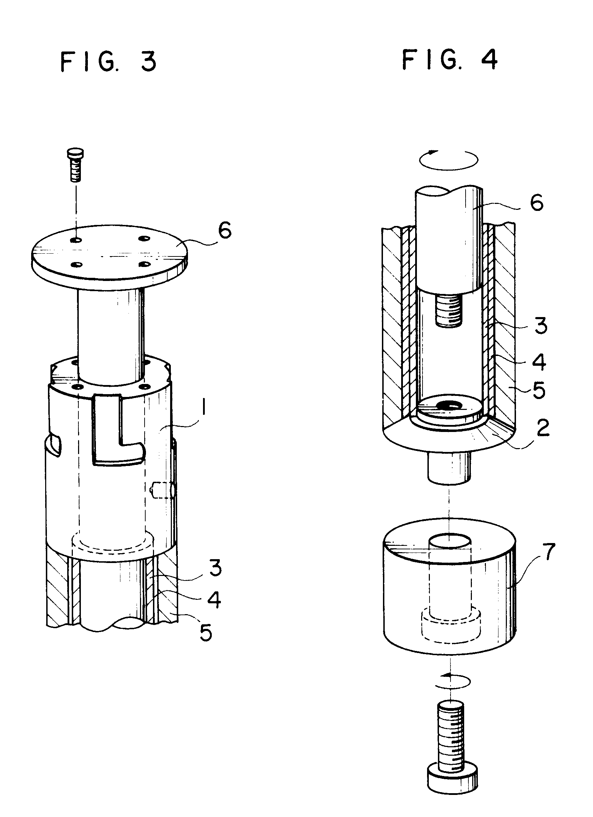

A specific process for producing the core is as follows. The process for producing the core is described below in detail with reference to Figs. 3 to 10.

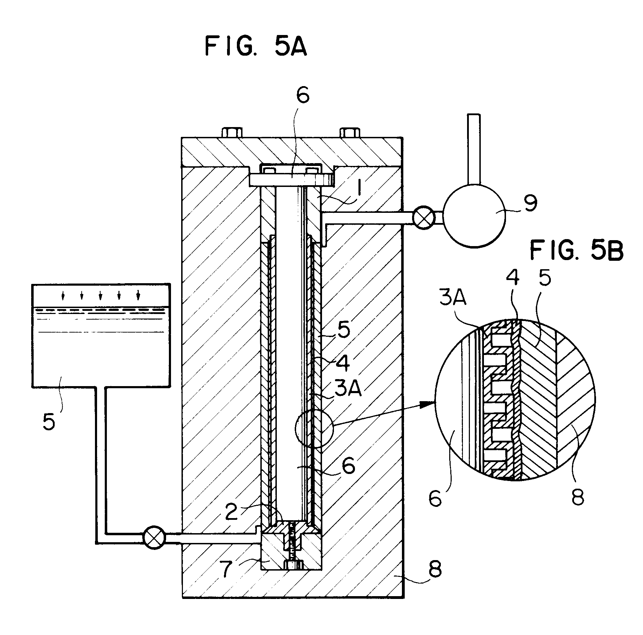

As shown in Figs. 3 and 4, a metal terminal part 1 having portions for positioning and supporting in a mold by means of pins or the like during molding and a gripe or a hitching portion, and a metal terminal part 2 are attached to the skeletal structure 3 (a flexible pipe) shown in Fig. 1 or Fig. 2 at one end of a flexible pipe and the other end, respectively, by a means such as welding, or bolts and nuts. Next, a metal rod 6 which fits the inside diameter of the skeletal structure having the metal terminal parts 1 and 2 attached thereto is inserted into the skeletal structure and fixed by means of, for example, bolts. The surface of the skeletal structure 3 is covered with a heat-shrinkable tube made of silicone (thickness: 0.5 to 1 mm) 4 and the tube is heated to be adhered to the surface of the skeletal structure 3. Subsequently, as shown in Fig. 5, said structure is inserted into a cylindrical mold 8 for vacuum casting, and the mold cavity is evacuated by means of a vacuum pump 9. Then, silicone rubber 5 of the same kind as with the tube 4 covering said structure is injected so as to make its surface smoothly and adjust its size to the inside diameter of a product, followed by pressurizing. Thus, said structure is coated with the silicone rubber 5, which is then heated and vulcanized. In this case, if necessary, an adapter 7 may be used in the coating with the silicone rubber 5. In the present process, the adapter may be used for positioning in the mold 8.

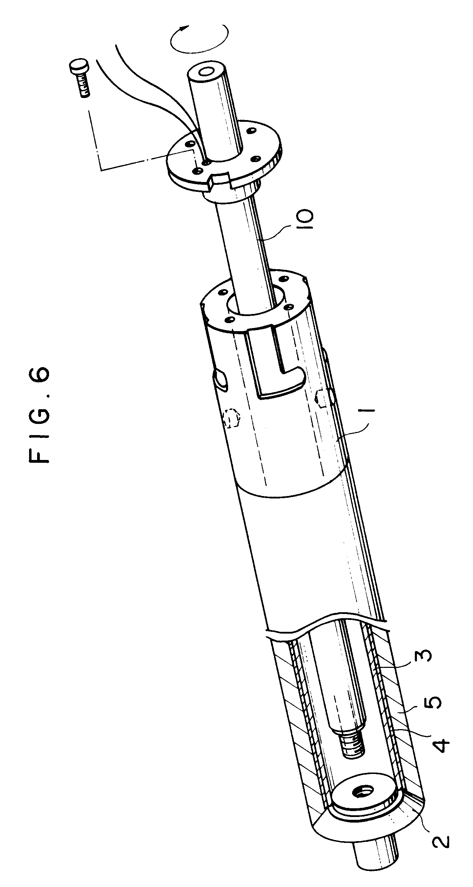

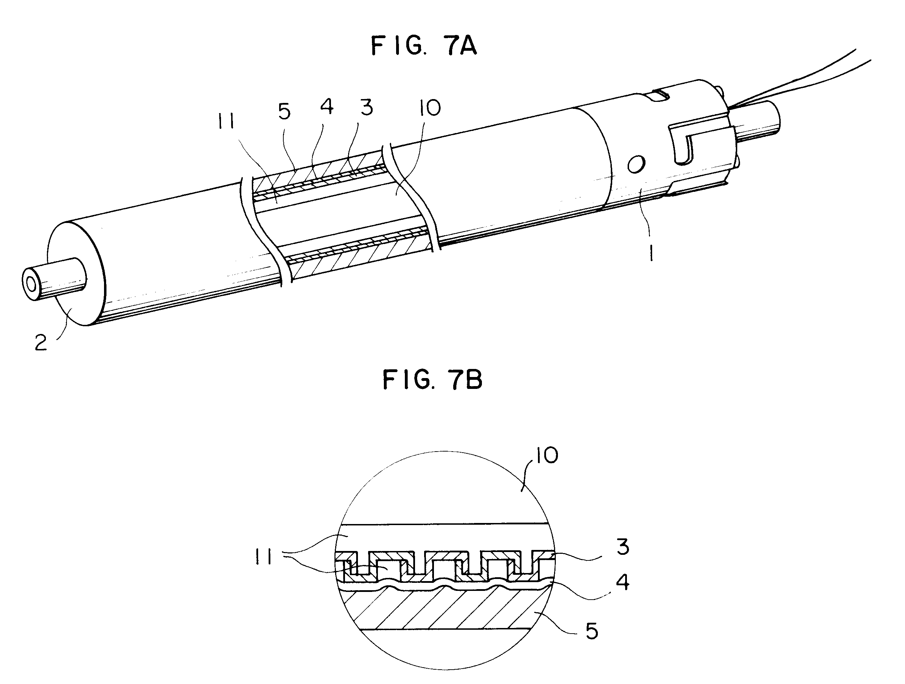

Next, the metal rod is drawn out from said structure. As shown in Figs. 6 and 7, a flexible heater 10 which, like the skeletal structure, has a high flexibility is inserted into the hollow portion of said structure and fixed. A low-melting alloy 11 is sealed in a space between the inner surface of the skeletal structure 3 and the outer surface of the flexible heater 10, whereby the desired core is obtained. The melting point of alloy to be sealed therein will be in range of about 50°C as a lower limit and about 140°C as an upper limit, while the alloy can be freely chosen depending upon a kind of the resin, the manner for applying the resin and the like.

Needless to say, the metal terminal part 2 should have such a shape as causes no trouble in withdrawal of the core from a molded product.

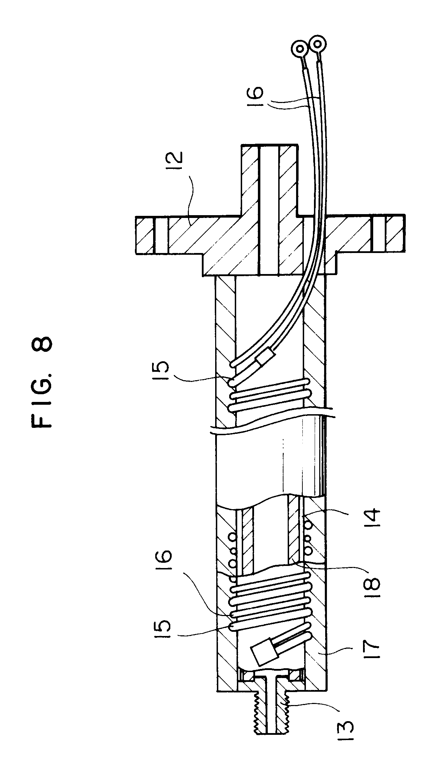

It is sufficient that the aforesaid heater having a high flexibility has a capacity enough to generate a heat capacity sufficient for melting the low-melting alloy 11 sealed in the core. Specifically, the heater is as follows. Specific examples of the constitution of the heater are explained below with reference to Fig. 8.

As skeletal structure 18 of the heater, there is used one which has the same constitution as that of the skeletal structure used in the aforesaid core. The metal terminal parts 1 and 2 shown in Figs. 3 and 4 and metal terminals 12 and 13 for fixation are attached to said structure by welding. Next, the surface of said structure is covered with an insulating layer 14 (a heat-shrinkable silicone tube and the like), after which a glass-Nichrome wire 15 is wound on to said structure at adequate intervals of, for example, about 5 mm. In this case, when lead-out wires 16 for electric source are desired to be in the same direction, the glass-Nichrome wire 15 and wires 16 for electric source are wound on to the insulating layer 14 in parallel with each other. As the wire 16 for electric source, a Teflon® (a registered trademark of Du Pont) coated wire having a high heat resistance is preferably used in view of the surface temperature of the glass-Nichrome wire.

Finally, the surface of the thus treated skeletal structure is coated with an elastomer 17 (silicone rubber) which, at least, does not flow at the melting point of the low-melting alloy to be used, whereby a flexible heater is completed.

The hollow portion of a small flexible pipe 18 of the heater can be used as a cooling cavity for cooling the core to solidify the low-melting alloy inside the core.

It is sufficient that the provision of said elastomer is carried out in the same manner as for the provision on the surface of the skeletal structure of core shown in Fig. 5.

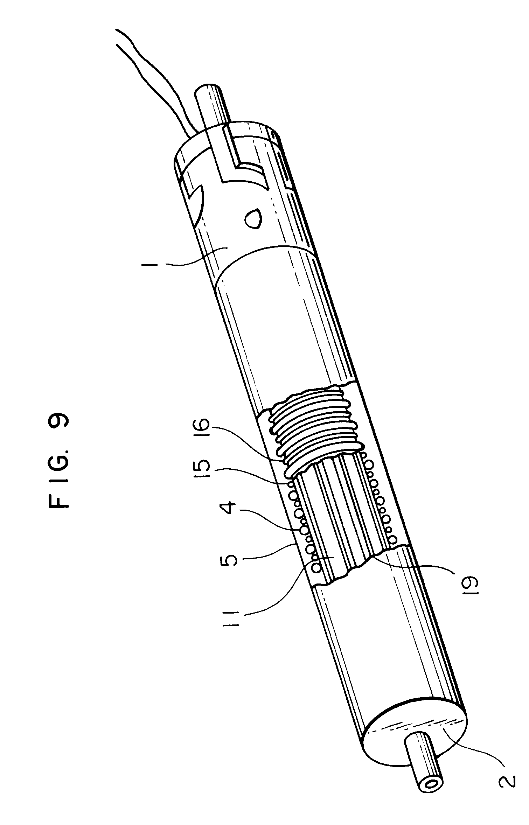

Needless to say, as shown in Fig. 9, a glass-Nichrome wire 15 may be wound on to the core itself in the same manner as described above. Preferably, a skeletal structure 19 having the same constitution as that of the aforesaid skeletal structure is inserted into the central portion of the core and fixed, and the hollow portion of an inner flexible pipe 19 is used as a cooling cavity for reducing the amount of the low-melting alloy 11, whereby the solidification time can be reduced. The skeletal structure 19, of course, requires a treatment, for example, coating of its surface with an elastomer for preventing air leakage.

Needless to say, materials constituting said heater and the constitution of said heater are not critical so long as they satisfy the requirements according to the present invention.

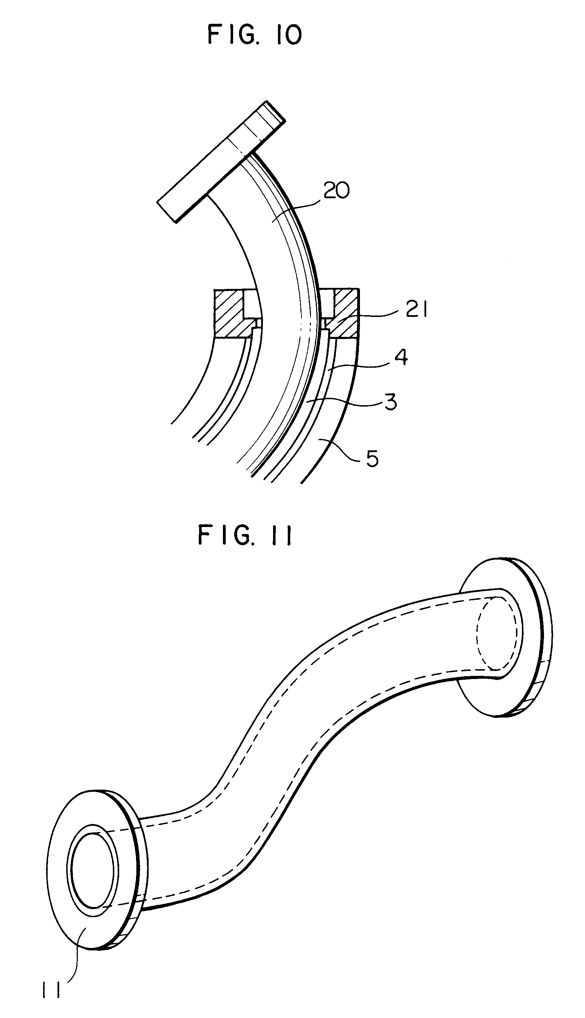

When an elastomer is previously coated in a desired shape in the case of a heater having the same constitution as in the above specific example, a metal terminal part 21 should, of course, be designed by considering the curvature radius of a metal rod 20 previously bent into a desired shape so that as shown in Fig. 10, the metal rod can be inserted into the skeletal structure 3 and drawn out therefrom. In this case, a split mold should be used.

As the resin used in the process for producing a molded product having bent hollow portion of this invention, either thermoplastic resins or thermosetting resins may be used so long as they satisfy required characteristics of the resin product. The resin may be incorporated with desired amounts of reinforcing agents, fillers, foaming agents, coloring agents, stabilizing agents, coloring agents, etc.

When a thermoplastic resin is used as the resin used for producing a resin product having a bent hollow portion by means of the core of this invention comprising a skeletal structure having high flexibility and shape retention and an elastomer coating thereon, there can be employed methods such as injection molding, foam injection molding, and the like. When a thermosetting resin is used, there can be used molding methods such as injection molding cast molding, transfer molding, compression molding, and the like.

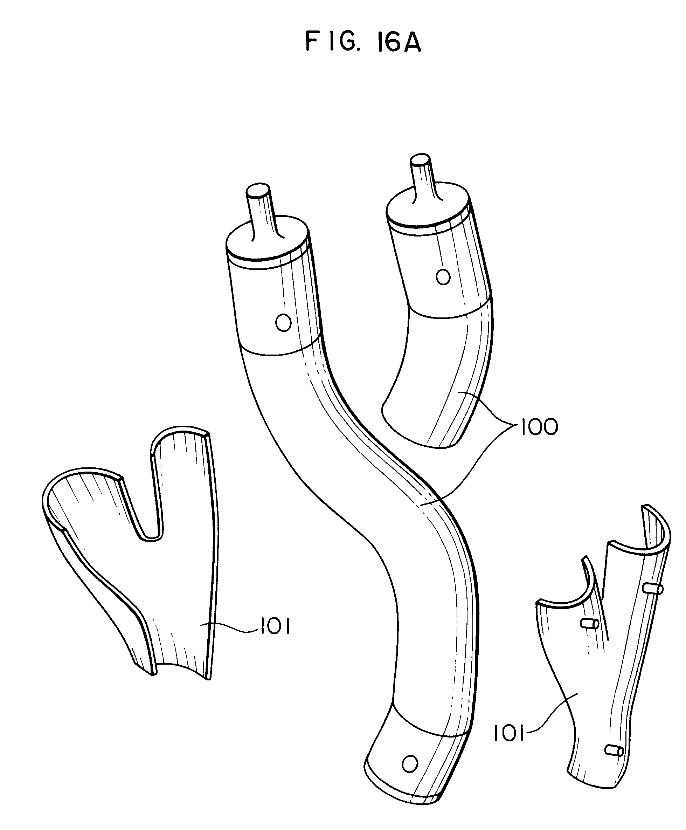

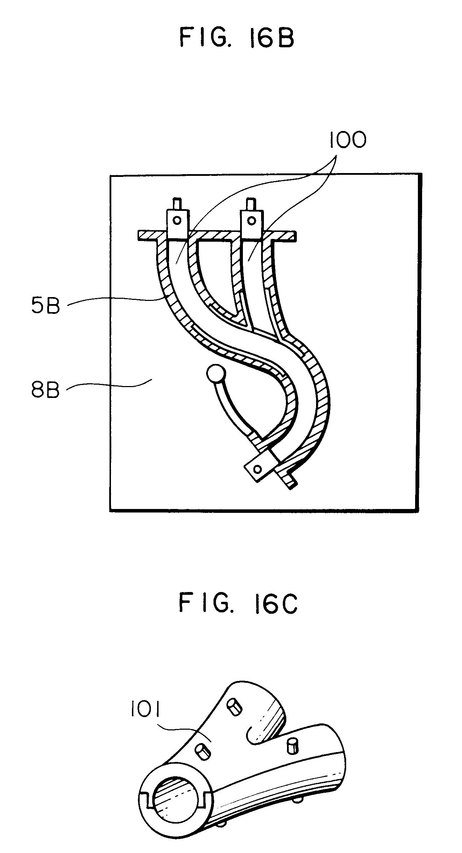

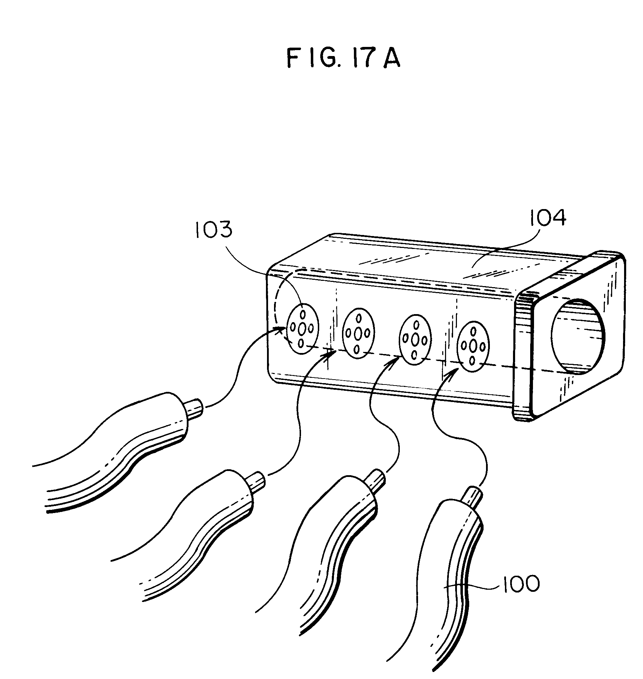

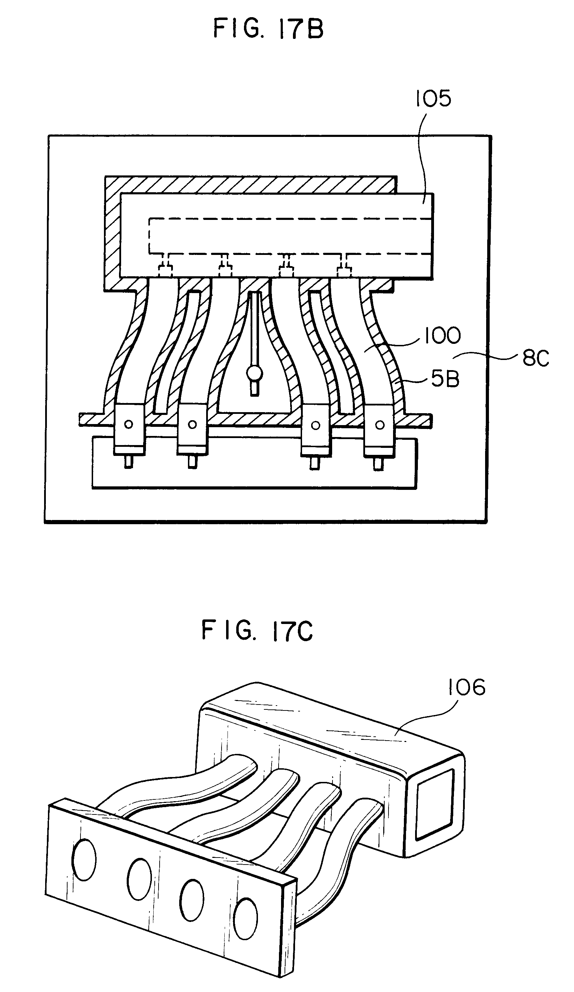

As a specific example, a process for producing a resin product in the form of two-forked pipe or multi-forked pipe is explained below with reference to Figs. 16 and 17. First, one example of production of a two-forked pipe is explained below.

In the two-forked pipe having a bent hollow portion shown in Fig. 16, cores 100 are used. Two of the cores are preformed in the same manner as described above, and then connected to each other by means of a part for branching 101 having a snap-fit structure for uniting the two cores in a body, to obtain a core for molding. Next, the core for molding thus obtained is inserted into a mold 8B and positioned. In this case, when fixation only at the end of the core involves a problem (for example, movement of the part for branching due to flow pressure of resin at the time of packing a resin 5), the part-for-branching 101 portion may be fixed by forming a projection or the like on the part for branching 101, and a hole in the mold 8B at the same position as that of the projection.

Subsequently, a resin 5B is packed into the mold 8B by injection molding or the like, after which the core 100 is drawn out from the resulting molded product while fixing the flange portion, by the same method as used in the case of the above S-tube, whereby a resin product of two-forked tube shape is obtained.

In this case, the part for branching is left in the molded product and constitute a part of the product.

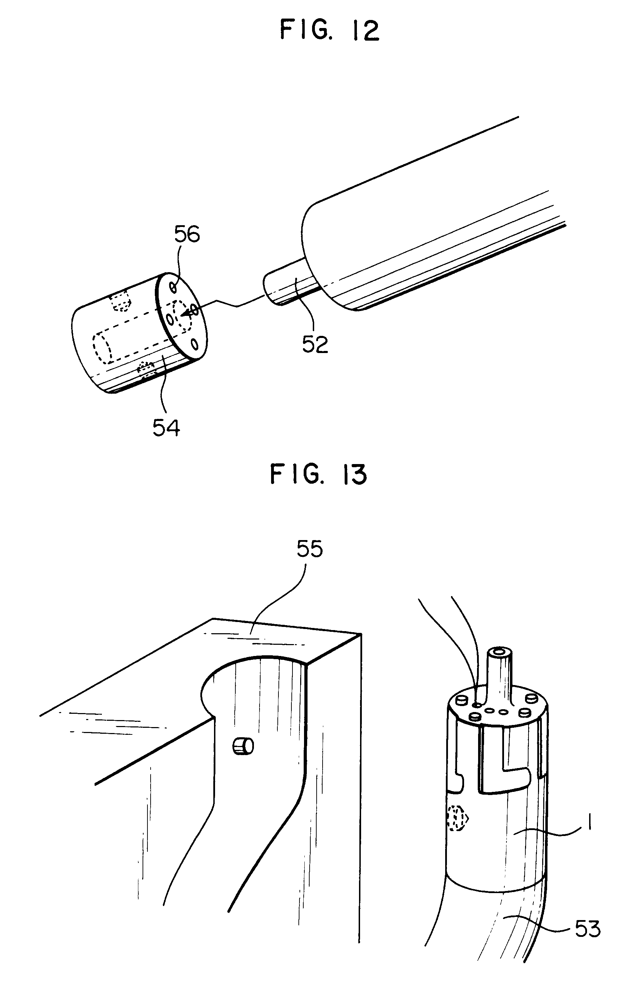

Next, in the case of the resin product in the shape of a multi-forked pipe shown in Fig. 17, magnets 103 are provided in a mold insert mandrel 104 for forming a hollow spacious portion which leads out of bent pipe portions, as in the case of the adapter shown in Fig. 12. A plurality of the cores 100 which have previously been preformed are connected to one another by means of the magnets 103 to obtain a core for molding. Subsequently, the core for molding is inserted into a mold 8C, and a resin 5 is packed into the mold cavity by injection molding or the like. Then, the resulting molded product 106 is taken out and the mold insert die 104 is drawn out, after which the core 100 is drawn out to obtain the resin product in the shape of a multi-forked pipe.

According to the present invention, a resin product having a bent hollow portion can be obtained by deforming a core having high flexibility and shape retention into a desired shape, inserting the deformed core into a mold, packing a resin into the mold cavity, and then drawing out the core from the resulting molded product.

For producing a resin product of two-forked or multi-forked pipe shape, it is sufficient that a plurality of the cores of this invention are united in a body by means of a part for branching or the like and used as a core for molding.

One example of constitution of a core for producing a two-forked molded product is the constitution of a core produced by combining the cores of this invention with a part for branching (a core-connecting part).

Here, the term "part for branching" means a part obtained by combining, by fitting, parts previously molded integrally or in at least two pieces, and joining them to one another by adhesion, deposition or the like. The structure of the part for branching and a material therefor are not critical so long as the part for branching has an ability to hold a plurality of the cores by insertion, interposition, or the like. As the material, there can used, for example, resins, metals, and ceramics.

When a core for a multi-forked pipe having a complicated shape is formed, it is sufficient that a plurality of the cores of this invention are connected to a rigid mold inset die, a core, or the like to unit them in a body. The core thus obtained can be used as a core for molding.

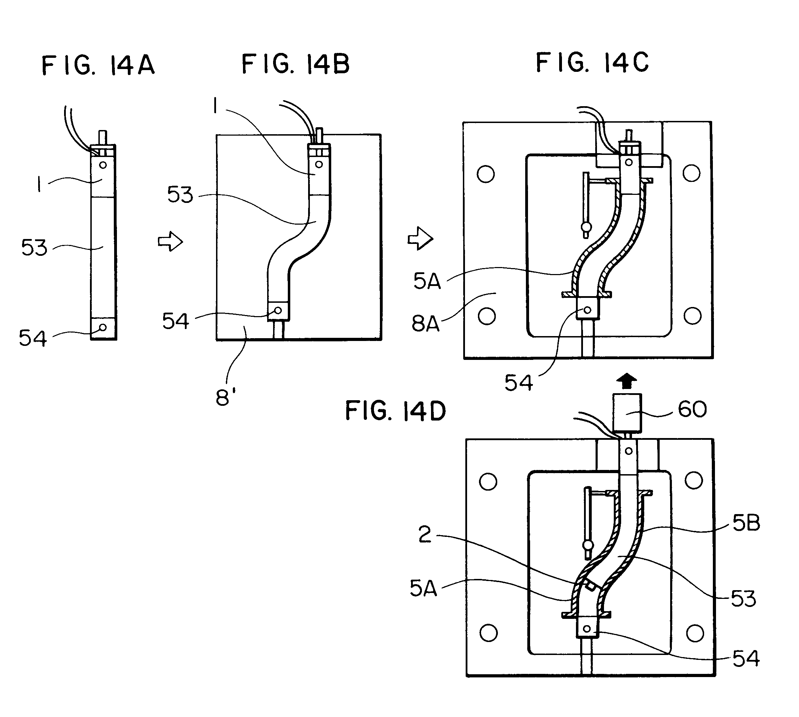

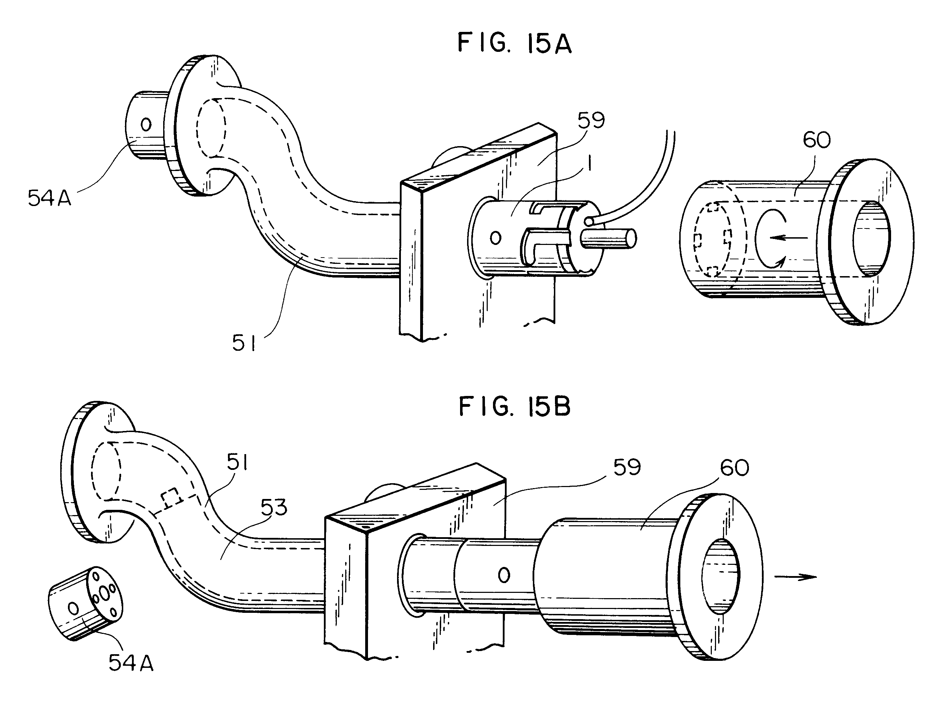

Specific examples are explained below for a pipe in the shape of the flanged S-tube shown in Fig. 11 with reference to Figs. 12, 13, 14 and 15.

For example, the cores are pushed in a mold for preforming while bending, and preformed. In this case, a mold for preforming 55 and an adapter 54 having pin holes or the like for positioning in a mold for injection molding, casting or the like are connected to the metal terminal part 2 side of a core 53. As a method for the connection of the adapter 54 to said core, there may be employed either a method of fixation by means of bolts, etc. or a method of inlaying a magnet 56 or the like in the adapter 54 and attaching the core to the adapter by means of the magnetic force.

Subsequently, the preformed core having the adapter 54 attached thereto is insert into the pin projections of a mold 8A while retaining its shape, and positioned, after which a resin 5A is packed into the cavity portion of the mold 8A by injection molding or the like. In this case, it is preferable to pack the resin 5A into the mold 8A from the metal terminal part 1 portion of the core so as to prevent generation of a bending force by the core 53 as much as possible.

After the packing of the resin into the mold 8A, the core 53 in the resulting molded product is drawn out directly from the molded product in the mold. It is also possible to take out the core together with the molded product from the mold, fix the flange portion of the molded product 5B on a fixing instrument 59, and draw out the core 53 from the molded product 58, for example, by seizing or highing the metal terminal part 1 or the core by means of a seizing tool 60 or the like, or by using oil pressure. In this case, the adapter used for positioning in the mold is separated from the core 53 and left at the end of the molded product 5B or in the mold 8A.

The core drawn out and the adapter 54 separated from the core are again combined and then preformed by means of a mold for preforming, and molding is carried out in the same manner as described above.

The heater inside the core can be first heated to melt the low-melting alloy inside the core, imparting a high flexibility to the core, and the core and an adapter 54 are pushed in at a predetermined position of a mold for preforming 8' while bending the same. Next, the low-melting alloy inside the core is solidified, for example, by natural cooling, cooling of the mold for preforming 8, or cooling by induction of air into the cooling cavity inside the core. The core is then inserted into a mold 8A, and a resin 5 is packed into the mold cavity by injection molding, casting, or the like.

Subsequently, the heater inside the core is again heated to melt the low-melting alloy inside the core, and the core is drawn out in the same manner as described above, after which the procedure described above is repeated to obtain a molded product 51.

The designs of the metal terminal part 1 having a portion to hitch, the adapter 54 and the hitching tool 60 used in the present invention are not critical so long as withdrawal of the core from a molded product and positioning of the core in a mold are possible.

### Example 1

A core was produced as follows. A flexible tube (outside diameter φ19 mm, inside diameter φ16mm) made of a metal (SUS) which had the constitution shown in Fig. 2A was coated with silicone rubber to a thickness suitable to adjust the outside diameter of the coated tube to φ27 mm. Then, such a flexible heater as shown in Fig. 8 which had an outside diameter of φ14 mm and a heater capacity of 60 w/m was inserted into the flexible pipe coated with silicone rubber and fixed, and a low-melting alloy (melting point: 138°C) was powered between the heater and the flexible tube and shut up therein to obtain a core (Fig. 7).

Subsequently, the heater inside the core was heated at 150°C to melt the low-melting alloy, after which the core was deformed and cooled to solidify the low-melting alloy, whereby the core was preformed. The core was then inserted into a mold and 33% GF-reinforced nylon 66 resin was packed into the mold cavity. After the packing, the heater was charged with electricity for about 3 minutes from the beginning of cooling time to melt the low-melting alloy inside the core again, and the core was drawn out from the molded product in the mold. The core could easily be drawn out with a force of about 70 kg, and a bent pipe made of the resin was thus obtained.

### Example 2

Molding was conducted in exactly the same manner as in Example 1, except that the melting point of low-melting alloy inside the core used in Example 1 was changed from 138°C to 74°C (substantially the same temperature as the mold temperature).

After packing of the resin into the mold cavity was completed, the center temperature of the core reached 100°C in cooling time (60 sec), and the low-melting alloy inside the core melted without charging the inner heater with electricity. Consequently, the core could be drawn out from the molded product, and a bent hollow pipe made of the resin was obtained.

### Example 3

Using the core used in Example 2, a composition prepared by incorporating 0.3% of a blowing agent into the resin (30% GF-reinforced nylon 66 resin) was subjected to structural form injection molding (foam level: 5 to 10%) by a short-shot method. The core was drawn out from the resulting molded product to obtain a bent hollow pipe made of the resin. In this case, the core could easily be drawn out with a drawing force 30% lower than that in Example 2.

### Example 4

As shown in Fig. 16, two cores were connected to each other by fitting by means of part of branching made of resin having a snap-fitting structure and projections enabling positioning in a mold which had previously been made of 43% GF-reinforced nylon 66 resin (LEONA® 14G43 mfd. by Asahi Chemical Industry Co.) by injection molding in two pieces. Then, the ends of the cores and the part for branching were fixed by inter-position, as a core for molding, simultaneously with mold-closing operation, and molding was conducted by the same method as in Example 1. Thereafter, only the two cores were drawn out from the molded product to obtain a two-forked resin product having a bent hollow portion. In this case, the part for branching remained in the molded product and constituted a part of the product.

### Example 5

As shown in Fig. 17, four cores having the same constitution as that of the core used in Fig. 4 were connected to a mold insert die for forming a hollow spacious portion, by means of the magnetic power of magnet inlaid in the mode insert die, whereby a core for molding was obtained.

The molding was conducted by the same method as in Example 1, after which the four cores were drawn out one by one. Thereafter, the metal insert die was drawn out to obtain a resin product having a bent hollow portion containing a hollow spacious portion.

In all of the above examples, there occurred neither marked change of the thickness of molded product nor its breakage at the time of withdrawal of the core, and a resin product having a satisfactory bent hollow portion could be obtained. Moreover, repeated use of the core had no substantial influence on the quality of molded product.

### COMPARATIVE EXAMPLES

### Comparative Example 1

A core was cast in a low-melting alloy (melting point of 138°C) in the shape of the S-tube shown in Fig. 11 so as to adjust the inside diameter of hollow portion of the tube to φ27 mm.

Then, the core was inserted into a mold for injection molding and 33% GF-reinforced nylon 66 resin (LEONA® (300G) mfd. by Asahi Chemical Industry Co., of natural color) was packed into the mold cavity at an injection pressure of 500 kg/cm². After the molding, the molded product was taken out of the mold and placed in a heating chamber (an air oven) at 150°C to melt away the core. But, the melting-away of the core required 3 hours or more and a color change of the molded article occurred. In addition, the low-melting alloy adhered to the inner surface of the S-tube molded product and could not completely be removed in the case of the method employed herein.

### Comparative Example 2

In order to reduce thermal discoloration of molded product and melting-away time, molding was conducted using an alloy having a melting point of 74°C, in the same manner as in Comparative Example 1.

But, the surface of the core melted at the resin temperature at the time of resin packing, so that no satisfactory molded product could be obtained.

### Comparative Example 3

For forming the hollow portion of the flanged S-tube shown in Fig. 11, a flexible metal pie (outside diameter φ19 mm, inside diameter 16 mm) having the constitution shown in Fig.-1(a) was used as a core. The flexible pipe was deformed into a desired shape and then inserted into a mold, and injection molding was conducted in the same manner as in Comparative Example 1. After the molding, an attempt was made to draw out the core from the molded product, but because of intrusion of resin into the uneven portion of the flexible tube, the core could not be drawn out and was broken.

As is clear from the above examples, the present invention has the following peculiar effects.
(1) The core of this invention obtained by coating a skeletal structure having high flexibility and shape retention with an elastomer can be repeatedly used, and a resin product having a bent hollow portion can easily be obtained merely by drawing out the core after applying the core with a resin.
(2) A resin product having a bent hollow portion composed of a two-forked or multi-forked pipe having a complicatedly forked, bent, hollow portion can easily be obtained by using a plurality of cores combined by means of a part for branching, or the like.

## Claims

1. A process for producing a resin product having a bent hollow portion, comprising the steps:
(1) providing a flexible core;
(2) sealing a low-melting point alloy (11) inside a hollow interior of said flexible core;
(3) coating an external surface of said flexible core with an elastomer, said elastomer being non-adhesive to a resin used to form said resin product;
(4) heating such flexible core to melt said low-melting point alloy;
(5) preforming said flexible core into a desired shape corresponding to said bent hollow portion of the resin product;
(6) cooling said flexible core after;
(7) installing said flexible core into a mold (8);
(8) applying said resin into said mold (8) to form said resin product, said resin directly contacting said elastomer adhered to the external surface of the flexible core, said elastomer remaining on said flexible core and not flowing at a molding temperature of said resin product;
(9) removing said resin product (100, 101) from said mold;
(10) reheating said flexible core to melt said low melting point alloy; and
(11) withdrawing the core from the resin product such that said elastomer is removed with said core.

2. The process of claim 1, wherein the step of providing a flexible core comprises constructing a forked core by joining a plurality of cores to one another through a part for branching.

3. The process of claim 1, wherein the step of providing a flexible core further comprises connecting said flexible core to a rigid mandrel, said rigid mandrel being installed into said mold together with said flexible core such that said resin product is formed with a hollow spacious portion combined with said bent hollow portion.

4. The process of claim 3, wherein the step of applying said resin into said mold comprises injection molding.

5. The process of claim 1, wherein the step of applying said resin into said mold comprises cast molding.

6. The process for producing a resin product having a bent hollow portion of claim 1, further comprising the step:
inserting a flexible heater (10) into a hollow interior of said flexible core, prior to sealing said low-melting point alloy (11) inside said hollow interior of the flexible core, wherein said flexible heater is heated to melt said low-melting point alloy (11) prior to preforming said flexible core, and reheated to melt said low-melting point alloy prior to withdrawing said core from said resin product.

7. A core for producing a resin product having an bent hollow portion, which comprises a skeletal structure (3) of a flexible metal tube or pipe, and an elastomer (4, 5) adherently provided on said skeletal structure, characterized by
a low-melting point alloy (11) sealed within a hollow interior central portion of said flexible metal tube or pipe, said low-melting point alloy (11) being melted to increase flexibility of said core and solidified to add rigidity to said core;
said flexible metal tube or pipe (3) having such a high retention of shape that the core is not substantially deformed at least by resin flow pressure during molding, and such a high flexibility that, at the time of withdrawal of the core, the core is deformed in accordance with the shape of the molded resin product and does not injure the molded resin product and that the bending or unbending force of the core is 50 kg or less; and
said elastomer (4, 5) is a member selected from the group consisting of a natural rubber, a silicon rubber, a fluororubber, a urethane rubber and a butadiene rubber, and having such properties that said elastomer is not adhesive and does not flow at the molding temperature of the resin product when the core is drawn out.

8. The core according to claim 7, wherein said core further comprising a flexible heater (10) provided in said hollow interior central portion of the flexible metal tube or pipe, and said low-melting point alloy (11) is sealed between the said flexible metal tube or pipe and said flexible heater (10).

9. The core according to claim 7, wherein said skeletal structure comprises a forked core obtained by joining a plurality of flexible metal tubes or pipes to one another through a part for branching.

10. The core according to claim 7, wherein said core comprises a plurality of cores for forming bent hollow portions connected to a rigid insert mandrel for forming a hollow spacious portion which is combined with said bent hollow portions.

11. Use of a flexible core according to claim 7 in a process according to claim 1, performing steps 4 to 11.

## Patentansprüche

1. Verfahren zum Erzeugen eines Harzprodukts, welches einen gebogenen, hohlen Abschnitt aufweist, umfassend die Schritte:
(1) Bereitstellen eines flexiblen Kerns;
(2) Abdichten einer niedrigschmelzenden Legierung (11) im Inneren eines hohlen Innenraums des flexiblen Kerns;
(3) Beschichten einer Außenoberfläche des flexiblen Kerns mit einem Elastomer, welches bezüglich des zur Bildung des Harzprodukts verwendeten Harzes nicht-klebend ist;
(4) Erwärmen dieses flexiblen Kerns, um die niedrigschmelzende Legierung zum Schmelzen zu bringen;
(5) Vorformen des flexiblen Kerns zu einer gewünschten Form entsprechend dem gebogenen, hohlen Abschnitt des Harzprodukts;
(6) anschließendes Abkühlen des flexiblen Kerns;
(7) Einbringen des flexiblen Kerns in eine Form (8);
(8) Einbringen des Harzes in die Form (8), um das Harzprodukt auszubilden, wobei das Harz direkt das an der Außenfläche des flexiblen Kerns haftende Elastomer kontaktiert, und das Elastomer an dem flexiblen Kern verbleibt und bei der Schmelztemperatur des Harzprodukts nicht fließt;
(9) Entfernen des Harzprodukts (100, 101) aus der Form;
(10) erneutes Erwärmen des flexiblen Kerns, um die niedrigschmelzende Legierung zu schmelzen; und
(11) Herausziehen des Kerns aus dem Harzprodukt, so daß das Elastomer mit dem Kern entfernt wird.

2. Verfahren nach Anspruch 1, bei dem der Schritt des Bereitstellens eines flexiblen Kerns beinhaltet: Herstellen eines gegabelten Kerns durch Verbinden mehrerer Kerne miteinander über einen Verzweigungsteil.

3. Verfahren nach Anspruch 1, bei dem der Schritt des Bereitstellens eines flexiblen Kerns außerdem aufweist: Verbinden des flexiblen Kerns mit einem starren Dorn, wobei der starte Dorn zusammen mit dem flexiblen Kern in der Form angebracht wird, so daß das Harzprodukt mit einem Hohlraumabschnitt ausgebildet wird, welcher mit dem gebogenen hohlen Abschnitt kombiniert ist.

4. Verfahren nach Anspruch 3, bei dem der Schritt des Einbringens des Harzes in die Form einen Spritzgießvorgang umfaßt.

5. Verfahren nach Anspruch 1, bei dem der Schritt des Einbringens des Harzes in die Form einen Gießvorgang umfaßt.

6. Verfahren zum Herstellen eines Harzproduktes mit einem gebogenen, hohlen Abschnitt nach Anspruch 1, weiterhin umfassend den Schritt:
Einbringen einer flexiblen Heizvorrichtung (10) in einen hohlen Innenabschnitt des flexiblen Kerns, bevor die niedrigschmelzende Legierung (11) im Inneren des hohlen Innenabschnitts des flexiblen Kerns abgedichtet wird, wobei die flexible Heizvorrichtung erwärmt wird, um die niedrigschmelzende Legierung (11) zu schmelzen, bevor der flexible Kern vorgeformt wird, und erneut erwärmt wird, um die niedrigschmelzende Legierung zu schmelzen, bevor der Kern aus dem Harzprodukt herausgezogen wird.

7. Kern zum Erzeugen eines Harzproduktes mit einem gebogen, hohlen Abschnitt, umfassend eine Skelettstruktur (3) eines flexiblen Metallschlauchs oder Rohrstücks und ein Elastomer (4, 5), welches an der Skelettstruktur haftend vorgesehen ist, **gekennzeichnet** durch
eine niedrigschmelzende Legierung (11), die im Inneren des hohlen inneren Mittelabschnitts des flexiblen Metallschlauchs oder Rohrstücks dicht eingeschlossen ist, wobei die niedrigschmelzende Legierung (11) geschmolzen wird, um die Flexibilität des Kerns zu erhöhen und verfestigt wird, um dem Kern Steifigkeit zu verleihen;
wobei der flexible Metallschlauch oder das Rohrstück (3) eine derart hohe Formhaltigkeit aufweist, daß der Kern zumindest durch den Harzflußdruck während des Formvorgangs nicht wesentlich verformt wird, und eine solch hohe Flexibilität besitzt, daß zur Zeit des Herausziehens des Kerns der Kern entsprechend der Form des geformten Harzprodukts verformt wird und das geformte Harzprodukt nicht verletzt, und daß die Biege- oder Gegenbiegekraft des Kerns 50 kg (50 daN) oder weniger beträgt; und
das Elastomer (4, 5) ein Stoff ist, welcher aus der Gruppe Naturgummi, Silikongummi, Fluorgummi, Urethangummi und Butadiengummi ausgewählt ist und derartige Eigenschaften aufweist, daß das Elastomer bei der Formtemperatur des Harzprodukts beim Herausziehen des Kerns nicht klebt und nicht fließt.

8. Kern nach Anspruch 7, bei dem der Kern außerdem eine flexible Heizvorrichtung (10) aufweist, die in dem hohlen inneren Mittelabschnitt des flexiblen Metallschlauchs oder Rohrstücks vorgesehen ist, und die niedrigschmelzende Legierung (11) zwischen dem flexiblen Metallschlauch oder -Rohrstück und der flexiblen Heizvorrichtung (10) dicht eingeschlossen ist.

9. Kern nach Anspruch 7, bei dem die Skelettstruktur einen gegabelten Kern aufweist, der erhalten wird, indem man mehrere flexible Metallschläuche oder Rohrstücke miteinander über einen Verzweigungsteil verbindet.

10. Kern nach Anspruch 7, bei dem der Kern mehrere Kerne enthält, um gebogene hohle Abschnitte zu bilden, die mit einem starten Einsetzdorn verbunden sind, um einen Hohlraumabschnitt zu bilden, der mit den gebogenen hohlen Abschnitten kombiniert ist.

11. Verwendung eines flexiblen Kerns nach Anspruch 7, bei einem Verfahren nach Anspruch 1 unter Ausführung der Schritte 4 bis 11.

## Revendications

1. Un procédé pour produire un produit en résine ayant une partie creuse courbe, comprenant les étapes suivantes :
(1) on fournit un noyau flexible;
(2) on enferme de façon étanche un alliage à bas point de fusion (11) dans un intérieur creux du noyau flexible;
(3) on revêt avec un élastomère une surface extérieure du noyau flexible, cet élastomère étant non adhésif vis-à-vis d'une résine qui est utilisée pour former le produit en résine;
(4) on chauffe le noyau flexible pour faire fondre l'alliage à bas point de fusion;
(5) on préforme le noyau flexible pour lui donner une forme désirée correspondant à la partie creuse courbe du produit en résine;
(6) on refroidit ensuite le noyau flexible;
(7) on installe le noyau flexible dans un moule (8);
(8) on applique la résine dans le moule (8) pour former le produit en résine, cette résine venant directement en contact avec l'élastomère qu'on a fait adhérer à la surface extérieure du noyau flexible, et cet élastomère restant sur le noyau flexible et ne s'écoulant pas à une température de moulage du produit en résine;
(9) on retire du moule le produit en résine (100, 101);
(10) on réchauffe le noyau flexible pour faire fondre l'alliage à bas point de fusion; et
(11) on retire le noyau du produit en résine, de façon que l'élastomère soit enlevé avec le noyau.

2. Le procédé de la revendication 1, dans lequel l'étape consistant à fournir un noyau flexible comprend la fabrication d'un noyau ayant la forme d'une fourche, en joignant un ensemble de noyaux les uns aux autres par l'intermédiaire d'une pièce permettant de réaliser un embranchement.

3. Le procédé de la revendication 1, dans lequel l'étape consistant à fournir un noyau flexible comprend en outre l'accouplement du noyau flexible à un mandrin rigide, ce mandrin rigide étant installé dans le moule conjointement au noyau flexible, de façon que le produit en résine soit formé avec une partie spacieuse creuse combinée avec la partie creuse courbe.

4. Le procédé de la revendication 3, dans lequel l'étape d'application de la résine dans le moule consiste en un moulage par injection.

5. Le procédé de la revendication 1, dans lequel l'étape d'application de la résine dans le moule consiste en un moulage sous pression.

6. Le procédé pour produire un produit en résine ayant une partie creuse courbe selon la revendication 1, comprenant en outre l'étape suivante :
on introduit un élément chauffant flexible (10) dans un intérieur creux du noyau flexible, avant d'enfermer de façon étanche l'alliage à bas point de fusion (11) dans l'intérieur creux du noyau flexible, cet élément chauffant flexible étant chauffé pour faire fondre l'alliage à bas point de fusion (11) avant de préformer le noyau flexible, et réchauffé pour faire fondre l'alliage à bas point de fusion avant de retirer le noyau du produit en résine.

7. Un noyau pour produire un produit en résine ayant une partie creuse courbe, comprenant une structure de squelette (3) en un tube ou un tuyau métallique flexible, et un élastomère (4, 5) qui est incorporé de façon à adhérer sur la structure de squelette, caractérisé par
un alliage à bas point de fusion (11) enfermé de façon étanche dans une partie centrale intérieure creuse du tube ou du tuyau métallique flexible, cet alliage à bas point de fusion (11) étant fondu pour augmenter la flexibilité du noyau et solidifié pour augmenter la rigidité du noyau;
le tube ou le tuyau métallique flexible (3) ayant une capacité de rétention de forme si élevée que le noyau n'est pratiquement pas déformé, au moins par la pression d'écoulement de la résine pendant le moulage, et ayant une flexibilité si élevée qu'au moment où on retire le noyau, ce dernier est déformé conformément à la forme du produit en résine moulé et ne détériore pas le produit en résine moulé, et la force qui courbe ou qui redresse le noyau étant de 500 N ou moins; et
l'élastomère (4, 5) est un élément sélectionné dans le groupe qui comprend un caoutchouc naturel, un caoutchouc aux silicones, un caoutchouc fluoré, un caoutchouc du type uréthane et un caoutchouc du type butadiène, et il a des propriétés telles que cet élastomère n'est pas adhésif et ne s'écoule pas à la température de moulage du produit en résine, lorsque le noyau est retiré.

8. Le noyau selon la revendication 7, dans lequel ce noyau comprend en outre un élément chauffant flexible (10) qui est placé dans la partie centrale intérieure creuse du tube ou du tuyau métallique flexible, et l'alliage à bas point de fusion (11) est enfermé de façon étanche entre le tube ou le tuyau métallique flexible et l'élément chauffant flexible (10).

9. Le noyau selon la revendication 7, dans lequel la structure de squelette comprend un noyau en forme de fourche qui est obtenu en joignant les uns aux autres un ensemble de tubes ou de tuyaux métalliques flexibles, par l'intermédiaire d'une pièce destinée à former un embranchement.

10. Le noyau selon la revendication 7, dans lequel ce noyau comprend un ensemble de noyaux destinés à former des parties creuses courbes assemblées à un mandrin rapporté rigide, pour former une partie spacieuse creuse qui est combinée avec les parties creuses courbes.

11. Utilisation d'un noyau flexible selon la revendication 7 dans un procédé selon la revendication 1, pour accomplir les étapes 4 à 11.
